# EUROPEAN PATENT SPECIFICATION

(11) **EP 2 893 356 B1**
(45) Date of publication and mention of the grant of the patent: **27.04.2022**
(21) Application number: 13836175.3
(22) Date of filing: 05.09.2013
(51) Int. Cl.: G01N 35/00, G01N 37/00, G01V 8/10, H04N 5/225, B01L 3/00

(54) **UNIVERSAL DOCKING BAY AND DATA DOOR IN A FLUIDIC ANALYSIS SYSTEM**
UNIVERSELLE ANDOCK-BAY UND DATENTÜR IN EINEM FLUIDISCHEN ANALYSESYSTEM
BAIE D'AMARRAGE UNIVERSELLE ET PORTE DE DONNÉES DANS UN SYSTÈME D'ANALYSE FLUIDIQUE

(30) Priority: 05.09.2012 US 201261696924 P
(43) Date of publication of application: 15.07.2015
(73) Proprietor: Cepheid, Sunnyvale, CA 94089 (US)
(72) Inventor: CHANG, Ron, Sunnyvale, CA 94089 (US); MONTGOMERY, Steven, M., Sunnyvale, CA 94089 (US); MOTE, Gregory, E., Sunnyvale, CA 94089 (US)
(74) Representative: DREISS Patentanwälte PartG mbB
(86) International application number: PCT/US2013/058300
(87) International publication number: WO 2014/039703

(56) References cited:
- WO-A2-2008/060604
- WO-A2-2009/034563
- US-A- 5 980 830
- US-A1- 2001 053 336
- US-A1- 2011 206 557

## Description

### BACKGROUND OF THE INVENTION

### 1. Field of the Invention

The present invention is in the field of fluidic analysis and pertains particularly to methods and apparatus for automating sample analysis.

### 2. Discussion of the State of the Art

The analysis of fluids such as clinical or environmental fluidic samples may involve a series of processing steps or sequences including those sequences generally involved in chemical, optical, electrical, mechanical, thermal, or acoustical analysis of fluidic samples. Such processes used in fluid metering and analysis, whether incorporated by bench top instruments, disposable cartridges, or in so-called closed fluidic analytic systems are complex and are typically driven by complex algorithmic routines.

Conventional systems for processing and analyzing fluid samples may employ several fluid chambers, each one specifically configured for subjecting a fluid sample to a particular process step or sequence. The series of steps that can be performed on a fluid sample are typically limited to a sequence of steps performed according to a specific protocol. However, different protocols requiring different kinds of analytic processes require a more versatile approach if a single analytic system is to be employed to perform different types of processing on different types of fluid samples.

U.S. patent # 8,048,386 issued on November 1 2011, issued to inventors Dority and Chang, entitled "Fluid Processing and Control", teaches a modular housing containing multiple chambers for receiving, containing, processing and disposing of a fluid sample.

The fluid processing and control apparatus taught by Dority and Chang enables many different analytic processes to be executed and performed on fluid samples. The system reduces time and effort involved in manual processing, especially where multiple concurrent protocols and different types of processes are required for analysis. Publication WO 2008/060604 A2 discloses an analytic system of particular interest and comprising a bay receiving a micro-fluidic cartridge.

Further reduction in processing time and manual effort required of system operators might be achieved if additional automation relative to sample identification, sample source identification, process sequence identification, and real-time communication of ongoing process state could be realized.

Therefore, what is clearly needed in a closed fluidic control and analytic system is one or more universal docking bays for accepting multi-chamber cartridges containing one or more fluidic samples for analysis that overcomes the limitations described above. The instant invention addresses these and other concerns as detailed herein.

### SUMMARY OF THE INVENTION

The present invention is directed to an analytic system comprising a system controller, for example a data door, integrated into the system. The system controller can identify the source of one or more presented samples in a fluidic vessel or cartridge, and what specific processes need to be performed for sample analysis. The analytic system can comprise a universal docking bay for a fluidic vessel or cartridge, for example, as disclosed in US 8,048,386.

One aspect of the present invention provides for an analytic system comprising a bay having an opening on one side, the bay of a size and shape to enclose a cartridge carrying sample material to be analyzed, one or more mechanisms within the bay through which the cartridge and or material within the cartridge is influenced, a door of a size to cover the opening, a closure mechanism associated with the bay and the door, by which the door is held closed, and an imaging device incorporated in the door positioned and directed such that, with the door in an open position, the imaging device images the presence or absence of a cartridge and a visible indicia affixed on a surface of a cartridge in place in the bay.

Another aspect of the present invention provides for an analytic system comprising a bay having an opening on one side, the bay of a size and shape to enclose a cartridge carrying sample material to be analyzed, one or more mechanisms within the bay through which the cartridge and or material within the cartridge is influenced, a door of a size to cover the opening, a closure mechanism associated with the bay and the door, by which the door is held closed, and a display on the door, the display visible when the door is closed.

In another aspect of the invention an analytic method is provided, comprising the steps of (a) placing a cartridge carrying sample material to be analyzed, and one or more bar codes or QR codes, in a bay having an opening on one side of a size and shape to enclose the cartridge, and further having mechanisms within the bay through which the cartridge and or material within the cartridge is influenced; (b) imaging the cartridge by an imaging device incorporated in a door of a size to cover the opening, with the door in an open position, and acquiring by the imaging (i) presence of the cartridge, and (ii) one or more bar codes or QR codes affixed to a surface of the cartridge; and (c) closing the door and securing it closed by a closure mechanism associated with the bay and the door.

In some embodiments the system further comprises software executing from a non-transitory medium and access to data in a data repository. The software may comprise routines for operating the mechanisms through which the cartridge and/or material within the cartridge is influenced. For example, in some embodiments the mechanisms comprise activation of a rotary valve to align ports through which material is moved within the sample cartridge, and activation of a plunger that creates pressure alterations to urge material to translate between chambers in a sample cartridge.

In some embodiments the analytic sequence for a cartridge is selected in accordance with a visible indicia affixed to the cartridge in place in the bay. In some embodiments the visible indicia can be a bar code or QR code. The cartridge and operations associated with the cartridge are associated with an individual, and results of operations are stored associated with the individual visible indicia, for example, through a bar code or QR code affixed to the cartridge in place in the bay.

In some embodiments the door further comprises an electronic display on a side of the door visible to an operator with the door closed. The display may be a passive display and is updated periodically to indicate to an operator one or more of time to completion of an analytic sequence in progress, presence or absence of a cartridge in the bay when the door is closed, or one or more actions required by the operator to further a test sequence. In some embodiments the display may be a touch-screen display updated to present information to an operator, and wherein interactive indices are provided whereby the operator may initiate activities of the system.

In some embodiments of the method there is additionally a step executing software from a non-transitory medium and accessing data in a data repository. In some embodiments the software accomplishes operating the mechanisms within the bay through which the cartridge and or material within the cartridge is influenced by executing the software. In some embodiments the mechanisms comprise a rotary valve to align ports through which material is moved within the sample cartridge, and a plunger that creates pressure alterations to urge material to translate between chambers in a sample cartridge, further comprising steps for operating the rotary valve and the plunger.

In some embodiments a plurality of routines are accessed and executed to operate the mechanisms for individual ones of a plurality of analytic sequences, selected according to the nature of the sample material in the cartridge, which may be selected in accordance with a bar code or QR code affixed to the cartridge in place in the bay. The cartridge and operations associated with the cartridge may be associated with an individual, and results of operations may be stored associated with the individual through acquisition of a bar code or QR code affixed to the cartridge in place in the bay

In some embodiments of the invention the door comprises an electronic display on a side of the door visible to an operator with the door closed and secured by a closure mechanism, and information may be presented on the electronic display to an operator. This display may be a passive display updated periodically to indicate to an operator one or more of time to completion of an analytic sequence in progress, presence or absence of a cartridge in the bay when the door is closed, or one or more actions required by the operator to further a test sequence.

In some embodiments the door closure mechanism comprises a latch, in some embodiments the closure mechanism can be magnetic, snap-fit or click-fit mechanism.

Each of the separate embodiments of the invention as detailed herein can be combined with the different aspects of the invention, all of which fall within the scope of the present invention.

### BRIEF DESCRIPTION OF THE DRAWING FIGURES

Fig. 1 is an elevation view of a multi-bay fluidic analysis system according to an embodiment of the present invention.
Fig. 2 is an elevation view of a multi-chamber sample cartridge for use in the system of Fig. 1.
Fig. 3 is an end view of the cartridge of Fig. 2.
Fig. 4 is a block diagram illustrating basic system components of the system of Fig. 1.
Fig. 5 is a perspective view of a sample cartridge inserted into a cartridge bay of the system of Fig. 1 according to an embodiment of the present invention.
Fig. 6 is an elevation view of a single bay of the system of Fig. 1 before loading.
Fig. 7 is an elevation view of the cartridge of Fig. 6 playing a video instruction on an active display.
Fig. 8 is an elevation view of the bay of Fig. 6 during loading of a sample cartridge.
Fig. 9 is an elevation view of the bay of Fig. 6 closed after loading a sample cartridge.
Fig. 10 is an elevation view of the bay of Fig. 6 displaying a test authentication on the active display.
Fig. 11 is an elevation view of the bay of Fig. 6 during initiation of the procedure authenticated in Fig. 10.
Fig. 12 is an elevation view of the system of Fig. 1 depicting a running fluidic analytic sequence.
Fig. 13 is an elevation view of the system of Fig. 1 depicting a successful conclusion of a fluidic analytic sequence.
Fig. 14 is an elevation view of the system of Fig. 1 depicting user removal of a sample cartridge after a sequence was determined complete in Fig. 13.
Fig. 15 is a block diagram depicting assembled components of a bay data door of the system of Fig. 6 according to an embodiment of the present invention.
Fig. 16 is a flow chart depicting steps for running one or more fluidic analytic sequences on one or more sample cartridges of the system of Fig. 1.

### DETAILED DESCRIPTION

The inventors provide a unique system and methods for performing fluidic analytic sequences on fluid samples that enables automatic identification and authentication of ordered procedures as well as notification of procedural state and other information. The present invention is described in enabling detail using the following examples, which may describe more than one relevant embodiment falling within the scope of the present invention.

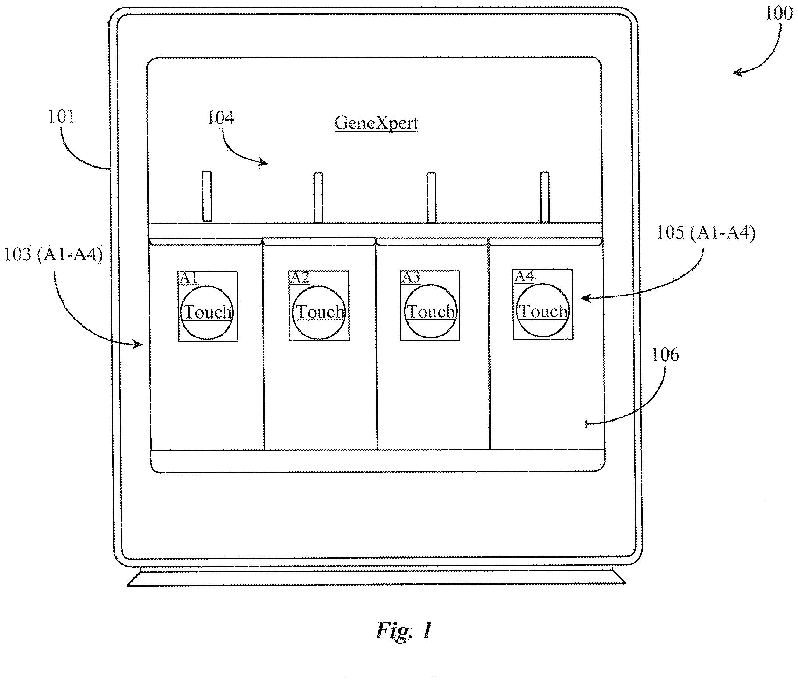

Fig. 1 is an elevation view of a multi-bay fluidic analysis system 100 according to an embodiment of the present invention. System 100 includes a housing or framework 101 that can be manufactured of sheet metal, aluminum, a durable polymer, or other suitable materials. Framework 101 includes multiple cartridge bays 103 (A1-A4) adapted to dock modular sample cartridges (not illustrated) that contain fluid samples for analysis. System 100 can contain more than four bays or fewer than four bays without departing from the scope of the present invention.

Each bay 103 (A1-A4) includes an operable bay data door 106 that can be manually and or automatically opened and closed to provide access to internal mechanical components and interfaces adapted to dock with a sample cartridge containing fluidic samples for analysis. Each data door 106 in one embodiment includes a visible electronic display screen 105 (A1-A4). Display 105 (A1-A4) can be a light emitting diode (LED) display, an organic display, a liquid crystal display (LCD), an electroluminescent display (ELD), or one of a number of types of displays for electronic devices. In some embodiments, display 105 (A1-A-4) is a passive display and in some embodiments, the display is a touch screen display capable of recording input in the form of touch by a human finger or stylus depending upon the technology used. In the case of a touch screen, display 105 (A1-A4) may be a resistive or a capacitive touch screen, or one of a myriad of other available touch screen technologies such as dispersive signal technology or acoustic pulse recognition.

In some embodiments, system 100 is a "dumb" system comprising framework (101) containing multiple bay sites that are adapted to receive independently operational computing modules that include all of the circuitry, CPU facilities, and hardware, including hinged bay data doors, to perform fluidic analytic procedures on fluid samples contained in modular cartridges that may be inserted therein and secured for initiation and performance of automated processing and test result reporting. In some embodiments, system 100 is a computing system having a CPU, memory, and power and communication bus structures. In this case, components of each bay site derive power and instruction from system 100. In some embodiments, CPU computing power is shared among the displays and the system CPU wherein each module located at each respective bay site has a separate CPU and memory, and wherein each of those peripherals communicates with the primary system CPU and memory and any external systems that might be connected to system 100.

Each bay site 103 (A1-A4) in some embodiments includes a visual indicator 104, in this case, an LED that provides procedural state information such as, for example, lighting up when an ordered procedure is running on a cartridge inserted into the bay site. In some embodiments, each bay site 103 (A1-A4) has one or more active buttons, switches, or other input mechanisms for the purpose of performing tasks like opening and closing the bay data door, initiating a sequence, clearing a data screen, and so on. In this particular example, displays 105 (A1-A4) are touch screen displays that may receive input from a user. Therefore, in the case of active touch screen displays there may not be a requirement for additional input buttons or switches local to a bay site, however the presence or absence of such input mechanisms shall not be construed as a limitation to the practice of the present invention.

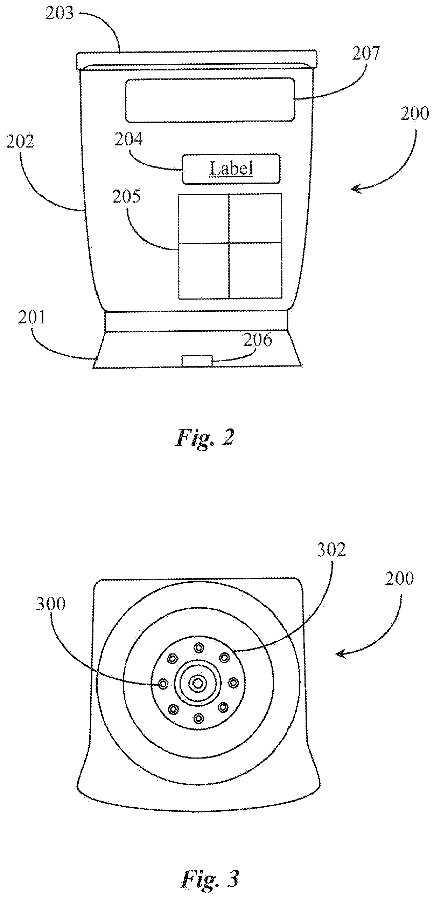

Fig. 2 is an elevation view of a multi-chamber sample cartridge 200 for use in the system of Fig. 1. Cartridge 200 may be molded from a durable medical grade polymer or other suitable medical grade materials. Cartridge 200 includes a cartridge body 202, a cartridge base 201, a cartridge top 203, and a cartridge alignment feature 206. Cartridge 200 is adapted for insertion into and mechanical docking by any one of bay sites 103 (A1-A4) of system 100 of Fig. 1.

Cartridge 200 contains at least one chamber (not illustrated) presenting a fluid sample for analysis. In some embodiments, multiple chambers (two or more) are present within cartridge 200. In the case of multiple chambers, one or more of the chambers may contain a sample for analysis and one or more of the chambers may be suited as one or more reaction chambers. In some embodiments of multiple chambers disposed within cartridge 200, one or more of those chambers may contain solid materials such as filter materials, reactant materials, enrichment materials, dispersion materials, or the like. Cartridge 200 may have one or more than one internal chamber without departing from the spirit and scope of the present invention. In some embodiments, chamber 200 may include a detachable reaction chamber disposed externally from cartridge body 202 and fluidically coupled to one or more of the internal chambers disposed within the cartridge body.

Referring now to Fig. 3, cartridge 200 is adapted, in some embodiments, to incorporate or receive a cylindrical, rotatable valve 302 containing a fluid displacement region and presenting multiple ports 300 in a rotary valve head capable of being rotated by a mechanical actuator to enable sealed coupling to selected numbers of like ports strategically disposed to interface to the multiple internal chambers in the cartridge body. There are in this exemplary embodiment eight ports 300 sharing a common radius pattern on valve 302, however there may be more or fewer ports 300 present on valve 302 and some ports may occupy a different radius pattern. The valve may be coupled to one or more fluidic channel coupling mechanisms and may include fluidic vacuum inducing apparatus and fluidic pressure inducing apparatus such as by a piston or by a hydraulically sealed mechanism to draw fluid into and dispel fluid from the fluid displacement region within the valve. In this way, fluids may be processed in one or more than one chamber as well as moved from one chamber to another via selectively coupled ports. Complete analysis of samples may be performed within cartridge 200 docked into any one of bay sites 103 (A1-A4) of system 100 without human intervention other than insertion and removal of the cartridge.

For further detail of construction and operation of cartridge 200 in different exemplary embodiments please refer to the Dority and Chang patent.

Referring now back to Fig. 2, cartridge 200 in some embodiments of the invention includes at least one barcode, such as a (UPC) barcode 207, and may also include a two-dimensional matrix barcode or quick response (QR) code 205. Cartridge 200 may be disposable in some embodiments and reusable in some embodiments. In some embodiments, cartridge 200 is pre-loaded with at least one fluidic sample for analysis, and typically such a sample is associated with a particular person. Cartridge 200 is likewise prepared for patient, sample, and test identification purposes with applied stickers presenting the at least one barcode 207 and/or QR code 205.

In some embodiments of the invention barcode 207 is associated in a database with a particular patient associated with the biological sample prepared for testing in the sample cartridge. There may be considerable information regarding the particular patient in the dB and information regarding the particular testing and analysis performed by the system using the bar coded cartridge, such as time and nature of the test and test results, for example, may be communicated to the database and stored associated with the particular patient or test subject. As described briefly above, the patient profile and medical information may be stored and updated at any location that is accessible by the communication apparatus associated with the system of the invention, either locally in the analysis unit, nearby by LAN to a server and data repository, or to remote systems reachable through the Internet or other wide area network.

Analysis may be performed on many different sorts of samples and for many different purposes using cartridges as described herein. Each specific situation will typically require sequencing instructions of the rotary valve and transfer of materials within the cartridge, motivated by movement of a piston in a chamber of the cartridge. The QR code in some embodiments is prepared and applied to the cartridge to indicate the specific processing procedure and timing to be accomplished with the specific cartridge to perform the analysis for the specific type of sample and desired test.

Further detail regarding the barcode and the QR code, and how they are used, acquired and decoded, and communication with one or more databases is described below.

Cartridge 200 may also have a visible indicia, for example, a sticker with a generic label, such as a label indicating a condition for which a test or tests are performed to confirm. In some embodiments, a human operator prepares cartridge 200 for insertion into system 100 of Fig. 1. In some embodiments, cartridge 200 is automatically prepared by a separate automated system which is not illustrated here. Optics incorporated into the data door of each bay site 103 (A1-A4) are provided to capture barcodes and/or QR codes, and reader software is provided to decode the information to identify the samples, tests, and source of the samples whether it be a human patient or some other sample source such as an animal or a biologic sample randomly collected from the field, such as from a stream or waterway.

There are many options for software storage and execution, and for acquisition and storage of test results, other data, and association with patient records. In some embodiments all software storage and execution is local, that is, at the multi-bay analysis system. In some embodiments one or more multi-bay systems may be connected on a local area network (LAN) on which a control server may be also connected, such as, for example, a general-purpose computer. In some embodiments the general-purpose computer may have an interactive interface for a user to command system functions and to display data to the user. In some embodiments data storage and association with patient records and the like may be via the well-known internet network to one or more Internet-connected servers with associated digital data repositories.

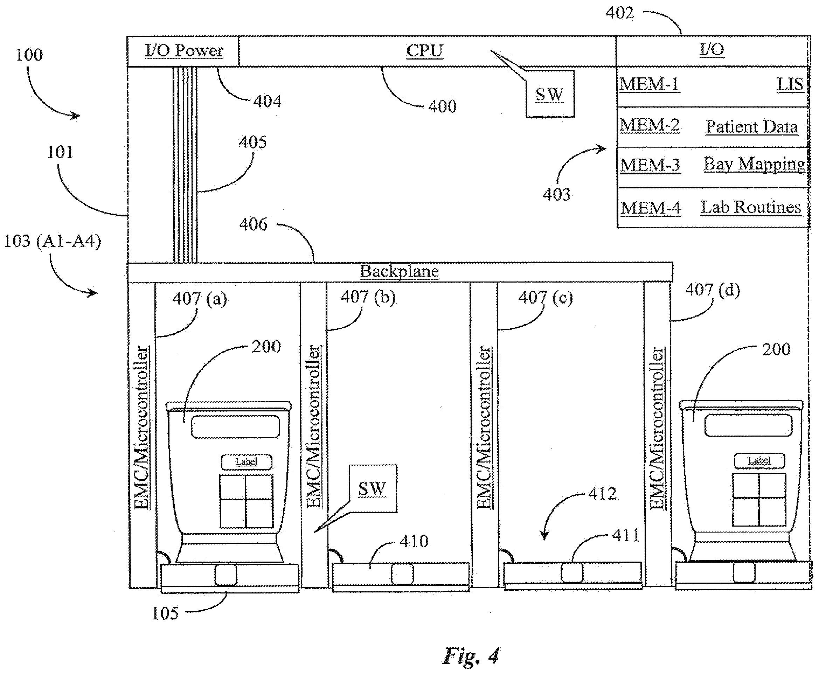

Fig. 4 is a block diagram illustrating basic system components of system 100 of Fig. 1 in one embodiment. System 100 may be adapted as a smart computing system or as a simple framework 101. In some embodiments framework 101 supports multiple independent computing modules (bay sites 103 (A1-A4). In some embodiments, each bay site module is plugged into a back plane 406. Framework 101 may, in some embodiments, include a central processing unit (CPU) 400. In some embodiments, the basic circuitry includes an input output (I/O) port 404 to connect the system to a power source, and in some aspects providing power to a peripheral or an external system or device. Framework 101 may also include I/O communication circuitry 402 for enabling computer network access to external systems or other systems on a computer network of systems. In the case of a smart system 100, an I/O power and communication bus may be provided to connect back plane 406 to power and to CPU 400 and associated resources. Back plane 406 allows communication between independent bay site modules.

In some embodiments, each bay site module includes an electromechanical controller (EMC) and micro controller 407 (a-d). Controllers 407 (a-d) are plugged into back plane 406 for power and communication access. In some embodiments, wherein frame 101 includes CPU 400, a memory block 403 is provided. Memory block 403 may contain any mix of read only memory (ROM), random access memory (RAM), or other suitable memory types that might be required for executing and running software, storing temporary data, and for storing permanent data. In this example, memory block 403 is compartmentalized logically to include memory (MEM-1) for storing laboratory information system (LIS) information such as orders and associated data for approved tests pending. For example, information required to approve and proceed with any test or procedure may be temporarily stored locally for quick sample, test procedure, and patient or sample source identification. In some embodiments the LIS may be directly accessed over I/O port 402 without caching any data.

Memory block 403 includes a portion of memory (MEM-2) for temporarily storing patient data including, but not limited to patient identification, primary clinical indication (illness disease), medical history summary information, and any other patient data deemed important to store for the purpose of running one or more analytic procedures on behalf of the patient. Sample source identification data may replace patient data in cases where applicable, like in a system that analyzes animal samples, for example. Memory block 403 includes memory for storing temporary state information about the occupancy of bay site modules with sample cartridges 200. In this example, bay site 103 (A1) and bay site 103 (A4) are occupied with a sample cartridge. Procedural state information may include notification of authentication received for one or more pending procedures, current status of a procedure currently running, notifications of error state or pause state for a running procedure, notification of total time for a procedure and any time left on a running procedure, and notification of successful completion of a procedure. Bay sites 103 (A2) and 103 (A3) are unoccupied by sample cartridges in this example and may present state information via display 105 that they are empty and ready to be used.

In some embodiments, memory block 403 includes a portion of memory (MEM-3) for storing real-time state information associated with bay site occupancy. Bay mapping data keeps track of all of the bay site occupancy states including sample source identification, patient identifications, procedure identifications, etc. Memory block 403 includes a memory portion (MEM-4) for temporary or permanent storage of Lab routines that may be selected for run one any of the bay sites. In some embodiments where framework 101 is a "dumb" framework, memory for storing data and executing programs and procedures may be included at each independent bay site 103 (A1-A4). CPU 400 and memory block 403 are not specifically required in order to practice the present invention. Each bay site 103(A1-A4) may be a fully independent site in terms of CPU processing, analytic testing, and notification and reporting features without departing from the scope of the present invention.

In this example, each bay site 103 (A1-A4) includes a bay data door logically represented herein as bay data door 412, shown as open and positioned substantially horizontally. Bay data door 412 is analogous to bay data door 106 of Fig. 1. In some embodiments, each bay data door 412 for each bay site 103 (A1-A4) includes a data display 105 presented outwardly when the data door is closed, an optical device 411 directed inwardly toward the bay that will hold a sample cartridge, the optics a for capturing bar code and/or QR code information, and circuitry 410 for operating the display and optical device. In one embodiment optical device 411 is a digital camera such as a charged coupled device (CCD) or C-MOS imaging device capable of capturing and decoding bar codes and QR codes with the aid of code-parsing software. In some embodiments, camera 411 is a scanner device enabled for optical character recognition (OCR) that automatically activates when a cartridge is inserted in the correct orientation into any of bay sites 103 (A1-A4). Circuitry 410 contains all of the circuitry required to operate display 105, optical device 411, and any sound card and speakers that might be associated with each independent bay site 103 (A1-A4). In some embodiments, each bay site 103 (A1-A4) includes all of the electromechanical components to operate each bay site data door 412 and mechanical components for fluid processing relative to a sample cartridge.

A valve rotary actuator for turning the rotary valve inside the cartridge during fluid processing including moving fluids out of one cartridge chamber and into another cartridge chamber or into a displacement region located within the valve head or in the cartridge as previously described is a part of the system, as is a piston for insertion into the cartridge for urging fluid from chamber to chamber, but neither mechanism is shown here. These mechanisms may be differently placed and operated depending at least in part on the design and geometry of the particular sample cartridge in use and the design of the system that accepts and manipulates the sample cartridge. These mechanisms may be pneumatically or electromechanically operated and are well known to persons of ordinary skill in the art. Although not specifically illustrated here, electromechanically-operated components such as valves, ports, rotary actuators, mechanical extenders, fluid injection apparatus, docking mechanics, and the like may be present and operational at each independent bay site 103 (A1-A4). In this way, multiple analytic procedures may be carried out on a sample cartridge without human intervention save for inserting and removing the cartridge.

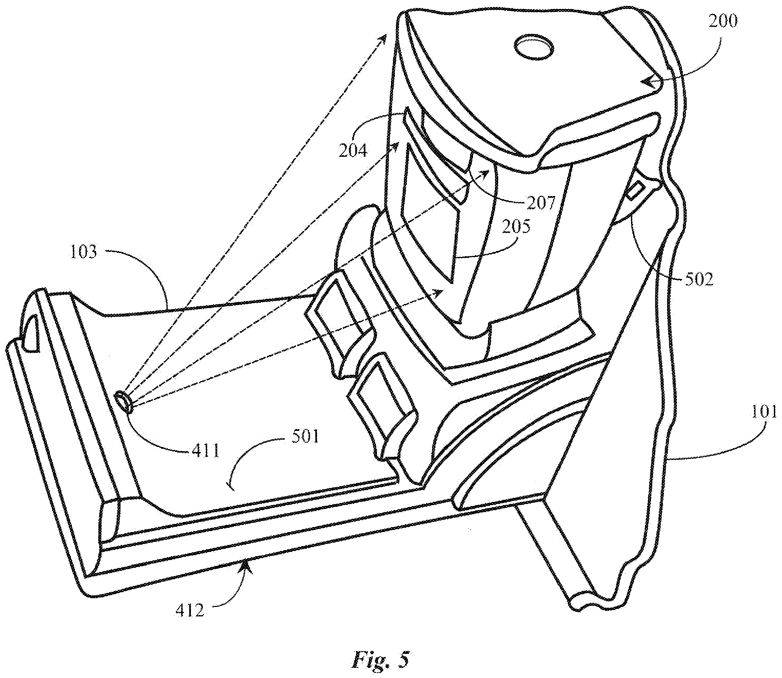

Fig. 5 is a perspective view of an exemplary sample cartridge 200 inserted into an exemplary cartridge bay site of the system of Fig. 1 according to some embodiments of the present invention. In this example, cartridge 200 has been prepared with stickers that include one bar code 207 and one QR code 205. A label 204 identifying a test or set of procedures is also illustrated. In this example, bay data door 412 is open while cartridge 200 is positioned inside the bay site. Optical device 411 is positioned within the data door and protected by a cover 501, which also covers the display and camera circuitry 410 (see Fig. 4). Before data door 412 is closed, camera 411 captures the fact that a cartridge is positioned for test initiation at a bay site. The camera also captures the barcode and QR code data for at least identification and authentication purposes. Element 502 in Fig. 5 represents a portion of an external reaction chamber analogous to chamber 408 of Fig. 4. In some embodiments, reaction chamber 502 is retractable to within cartridge 200. In some embodiments, reaction chamber 502 may not be present. In this example, bay data door 412 is hinged at a lower extremity, and can swing open outwardly.

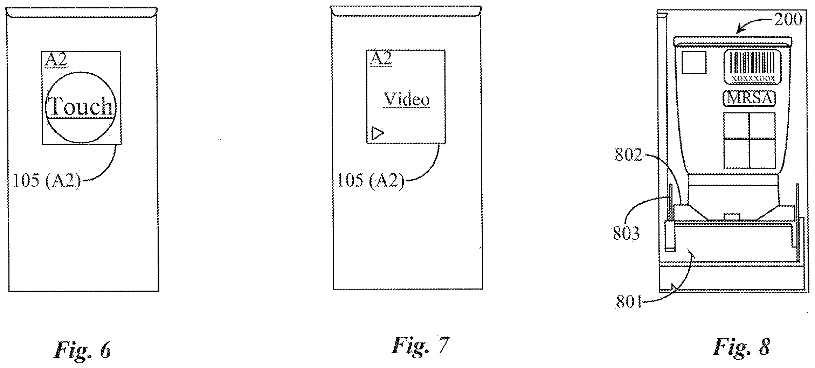

Fig. 6 is an elevation view of a single bay of the system of Fig. 1 before loading, shown with data door 412 closed with display 105 (A2) visible. In this example, the term "Touch" is displayed within a circle and is indicative of an empty site ready for loading a sample cartridge for processing. In this example, display 105 (A2) is a touch screen display and a user may touch the display to load and present further instruction relative to loading a cartridge for analytical processing. In some embodiments touching the screen at "Touch" will communicate to the software which will react to activate a mechanism to open the bay data door.

Fig. 7 is an elevation view of display 105 of Fig. 6 playing a video instruction on an active display. Display 105 (A2) has a video presentation loaded for play. A user may initiate play of the video by touching the play icon presented on the screen. The video may be an instructional video covering the process of inserting a sample cartridge into the bay site for processing. In some embodiments, a menu may be presented on display 105 (A2) that provides access to more than one video instruction and or more than one other option for proceeding.

Fig. 8 is an elevation view of the bay of Fig. 6, with the data door now open, during loading of a sample cartridge 200. In this view, a bar code 207 and a QR code 205 (Fig. 2) are visible. A snap-on cover 801 in the bay data door is analogous to cover 501 of Fig. 5. Hinge plates 803 are also visible in this view. The optical device (not visible here) captures the codes applied to the cartridge during preparation to identify and authenticate the sample source and to select proper test routines to perform on the sample or samples within the cartridge. In this example, the sample is a biologic sample taken from a patient who might have Methicillin-Resistant Staphylococcus aureus (MRSA).

As described previously with respect to Fig. 5, the optical device identifies the cartridge and tests required to test for MRSA from the biological sample. Likewise, information pertinent to processes performed at any particular bay site is displayed on the display device for that site so an operator may gain real time access to the data and to any instruction when required. The exact analytic processes that might be performed relative to one or more samples within a cartridge are not limited to medical diagnostics and are not relevant to the present invention. DNA analysis including polymerase chain reaction (PCR) processing, genome or exome sequencing, and other kinds of biologic analytic procedures may be performed in any bay site singly or concurrently without limitations. For example, substantially variant procedures may run concurrently in adjacent bay sites on disparate samples without conflict.

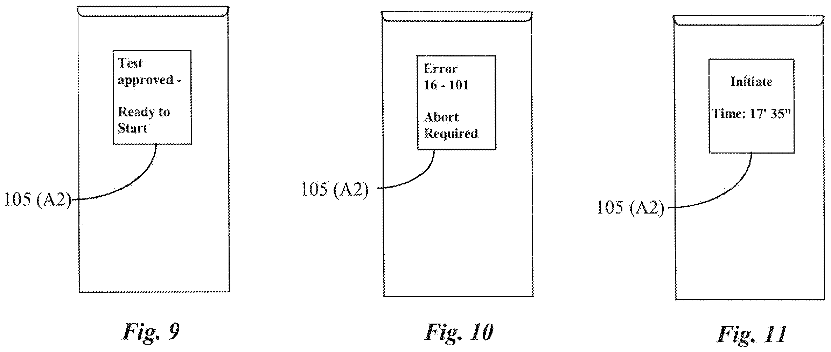

Fig. 9 is an elevation view of the bay of Fig. 6 with the data door closed after loading a sample cartridge. There are several alternative modes of operation that may be executed in different embodiments. In some embodiments the data door may be powered to open and close. The data door, when urged by a user, may close to a first position, and wait for an authentication procedure to verify that the sample cartridge is properly loaded and that the analytical procedure selected by the coding on the cartridge is loaded and ready, then the data door may latch automatically. In some embodiments the data door is opened by the system, but closed by a user. The authentication procedure confirms the information captured and processed from the one or more bar codes and or QR codes applied to the sample cartridge during preparation for analysis.

The authentication procedure may also confirm that the pending analytical procedure or procedures were pre-ordered and approved. The process is dependent on software that parses the code data captured optically from the sample cartridge and by software that aids in accessing and performing a lookup in a laboratory information system (LIS) or like information system using the code data to match with procedural order information, patient information, and or other data contained in the LIS that can be matched to cartridge data. The results of authentication and confirmation may be displayed for an operating user on display 105 as described in more detail below. One or more audible sounds or beeps may also accompany the data results. The authentication or approval process may depend on one or more conditions such as clear and successful capture of and identification of the data on the cartridge, and clear and successful match of a portion or all of the data to data contained within the LIS or other information system.

An error in capturing or identifying the barcode or QR code data may result in display of an error message requiring the operator to remove and reinsert the cartridge or to check the optical parameters such as camera view and code sticker integrity. An error in matching data from code to LIS data may result in an error that informs the operator that the pending procedures are not yet authorized, meaning that there may be no current order in the system for that cartridge.

Fig. 10 is an elevation view of the bay of Fig. 6 displaying an error message that indicates one or more problems leading to a need to abort the test. The error or errors may be any of a number of physical conditions or data discrepancies. The error condition may also be alerted by an audible alert. The operator may be enabled to display further detail about the problems leading to a need to abort by interacting with the touch screen.

Fig. 11 is an elevation view of the bay of Fig. 6 during initiation of the procedure. In this case an operator has closed the bay data door to a second, latched position. In some embodiments, a magnetic, snap-fit, or click-fit closure mechanism are used. In some embodiments there is only one closed position for the bay data door and the procedure or procedures to be run on the sample within the cartridge are initiated through the touch screen display. In this case, the display may present one or more visible and touch-interactive options for the operator to select. One of the options displayed may be an icon that the operator may select via touch to activate the pending procedure or procedures. There are many different possibilities for enabling initiation of the approved tests at each bay site.

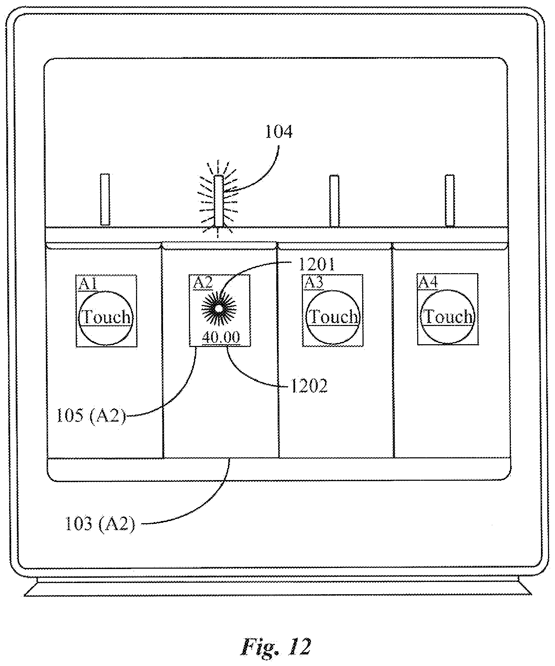

Fig. 12 is an elevation view of the system of Fig. 1 depicting a running fluidic analytic sequence in bay site 103 (A2) occupied with a cartridge in the process of being analyzed or processed according to the tests or procedures approved in Fig 9 and initiated in Fig. 11. Display 105 (A2) depicts a running graphic 1201 that is indicative of a procedure in a running state. A time indication 1202 is displayed on display 105 (A2) that informs the operator of the time remaining for the current procedure. In this case the time is 40:00 minutes. In some embodiments the time indicator decrements according to the timed progression of the procedure.

In some embodiments of the present invention, a wireless communication component is provided uniquely to each independent bay site and supported by circuitry 410. Aided by software and user configuration, the wireless communication component may be used to extend the display in real time to the display of a hand-held computing appliance such as a smart phone, iPad, or Notebook adapted for wireless communication and operated by the user. The collection of displays for each bay may be wirelessly communicated to the operator's hand-held device so that the operator may not be required to visually monitor the system from immediately in front of the system.

Such wireless extension of the display functionality may enable the operator to perform other tasks while procedures are running and then be notified via hand-held display when tasks such as removing and replacing a cartridge and initiating new approved procedures are required. In some embodiments software provided to the hand-held appliance aids in enabling the user/operator to apply touch screen input to the extended display for communication to display 105 (A1-A4) and implementation similar to a wireless remote control platform. In some embodiments the hand-held appliance may also communicate with a local or remote database, and there may be interactive features allowing the operator to access and edit data directly without channeling through the bay apparatus. In the example of Fig. 12 LED 104 is lit indicating visually that the bay site is occupied and that tests are being run on the inserted cartridge.

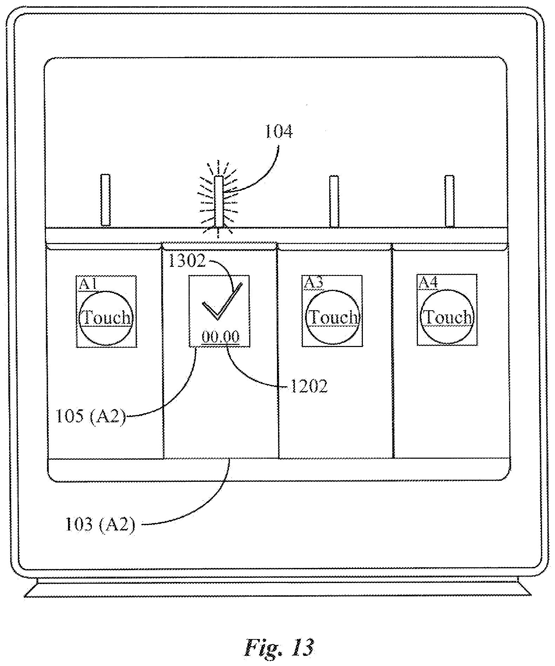

Fig. 13 is an elevation view of the system of Fig. 12 depicting a successful conclusion of a fluidic analytic sequence. Display 105 (A2) of bay site 103 (A2) indicates that a single or series of test procedures run on the inserted cartridge (200) are successfully completed. The indications are characterized in this example by time indicator 1202 reading zero time left, and by a visual indicator 1302 in the form of a check mark indicative of a successfully completed test or procedure. LED 104 is lit to indicate that bay site 103 (A2) is still occupied by a cartridge (200).

In some embodiments where there is more than one procedure set to run serially, time indicator 1202 may reset for the next procedure. Multiple check boxes may be displayed for multiple procedures set to run serially. As each procedure completes, the check box associated with that procedure might display a check mark. The next procedure will immediately begin and the time indicator for that sequence will display the current time remaining for that procedure. When all of the procedures are completed successfully, all of the boxes will be checked and all of the time indications will read zero.

In some embodiments where two or more procedures are ordered on one cartridge inserted into a single bay site, a procedure may fail or otherwise not be successfully completed. In this case, the operator may be notified of the error and perhaps be given the option of running the remaining procedures that have not yet been initiated before attempting the failed procedure again. In some embodiments where a cartridge is subject to multiple procedures and the display is a touch screen, the display may depict a procedure scrolling mechanism that the operator may manipulate to scroll through the available procedures and select which ones to perform in serial order. Optionally, one or more of the available procedures may be skipped or left out. In some embodiments using a touch screen, a user may add one or more additional procedures to a list of one or more procedures already indicated for the cartridge. The additional procedures may be added using touch screen input.

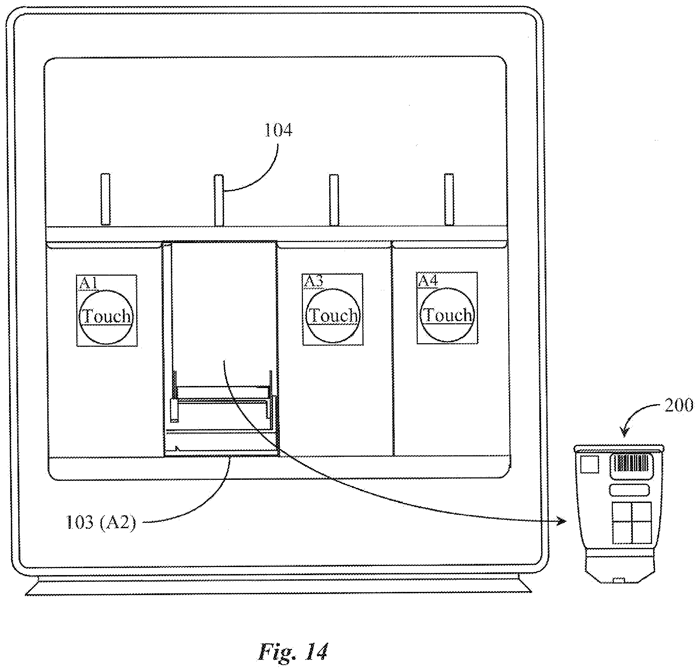

Fig. 14 is an elevation view of the system of Fig. 1 depicting user removal of a sample cartridge after a sequence was determined to be complete in Fig. 13. In this example, bay site 103 (A2) has been opened after completing one or more procedures successfully. Cartridge 200 is subsequently removed from bay site 103 (A2). LED 104 is now not lit and the user may close the bay data door. Display (105) will immediately indicate an empty bay site to the operator as described above relative to description of Fig. 6. In some embodiments, a cartridge that has been successfully processed may be physically stamped or otherwise tagged by the system to help ensure that the cartridge is not reinserted into the system erroneously.

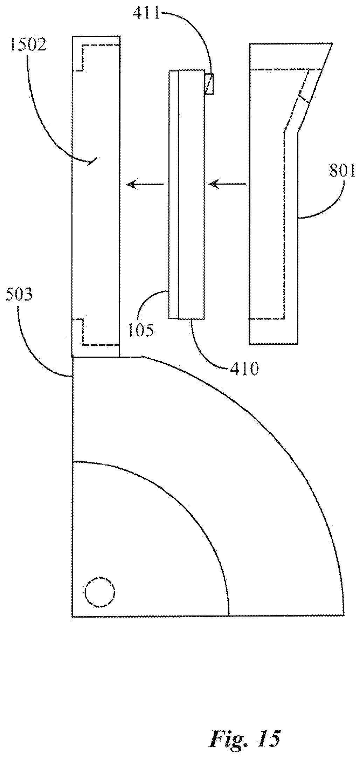

Fig. 15 is a block diagram depicting assembled components of a bay data door of the system of Fig. 6 according to some embodiments of the present invention. In a preferred embodiment, bay data door 412 includes a basic data door frame 503. Data door frame 503 includes a window 1502 adapted for receiving display 105 and a pocket 1503 formed behind the window, pocket 1503 enclosing circuitry 410. In this example, camera 411 is supported by circuitry 410 on the opposite side of the display and is disposed strategically at the center and near the end of the bay data door footprint for data captures. Plastic cover 801 snaps on to data doorframe 503 over circuitry 410 and camera 411 securing them into place in the bay data doorframe while protecting circuitry 410 and camera 411 from exposure to the elements.

In some embodiments the overall dimensions of display 105 are smaller than the inside dimensions of window 1502 so that the display is fully visible on the face of the data door. The overall dimensions of circuitry 410 are slightly larger than the inside dimensions of window 1502 so that the circuitry bottoms out against the inside wall of the data door. The overall dimensions of snap-on cover 801 are slightly smaller than the inside dimensions of pocket 1503 so that it may be secured over camera 411 and circuitry 410.

Each bay data door assembly may be connected for power and communication to the EMC/Micro controller dedicated to that bay site. The controllers drive both the site electromechanical components and site data presentation through the data display on the data door front. In some embodiments, the bay data door is physically opened and closed by the operator. In some embodiments using a touch screen display, the bay data door is opened and closed by command input through the touch screen display. In some embodiments, the bay data door is electromechanically operated to open and close through interaction with the touch screen. In some embodiments, the bay data door is pneumatically operated to open through interaction with the touch screen.

In some embodiments to complete a bay site independent module, the bay data door with display, camera, and supporting circuitry is wired to an adjacent motherboard supporting the EMC/micro controller, which is plugged into a back plane when installed to the system framework.

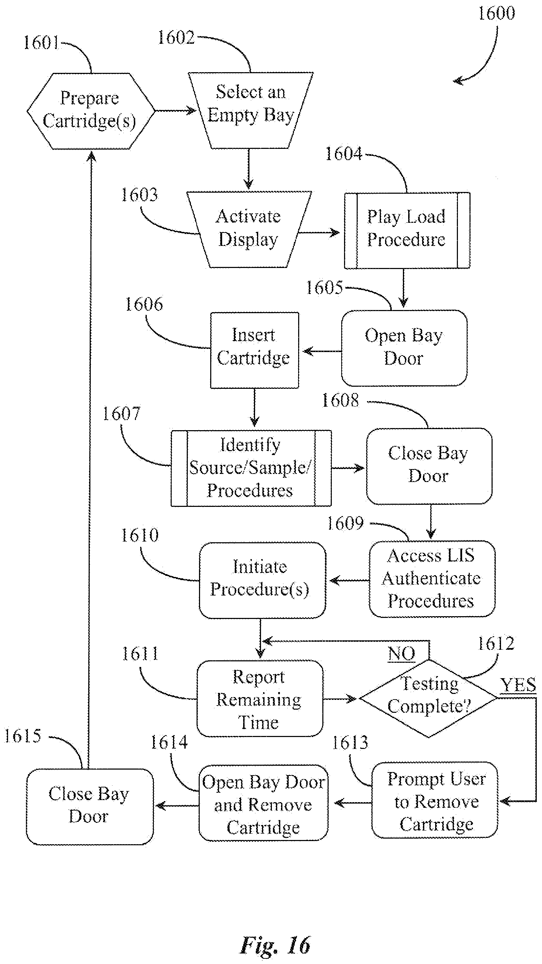

Fig. 16 is a flow chart 1600 depicting, in some embodiments, steps for running one or more fluidic analytical sequences on one or more sample cartridges of the system of Fig. 1. At step 1601, an operator prepares one or more than one cartridge for processing. This process may include placement of one or more fluidic samples within the cartridge. In some embodiments, the samples may be contained in chambers that are insertable into pre-specified chamber footprints within the cartridge. In some embodiments, the samples are injected into the appropriate chambers within the cartridge. In this process, the operator places one or more barcode and or QR code stickers on the external cartridge wall that faces the inside of the bay data door when inserted into the bay site. The codes provide data identifying the sample, the sample source, and the ordered procedures to be performed on the sample or samples within the cartridge. In some embodiments all or a part of the tasks represented by step 1601 are performed automatically by equipment not described herein.

At step 1602, the operator selects an empty bay site. The display on the bay data door may present an icon or other graphic that signifies that the bay site is empty and ready for a new cartridge. In some embodiments using a touch screen display, the display may be activated at step 1603, to load and play an instructional presentation at step 1604, in this case, a cartridge-loading procedure. The instructional presentation may be a video, slide show, or text display. The presentation may include audio instruction in embodiments where speakers are present.

At step 1605, the operator opens the bay data door of the bay site selected at step 1602. In one embodiment using a touch screen display, the operator may open the data door through touch screen command input. In some embodiments, the bay site includes one or more control buttons, one of which may be interacted with to open the data door. In some embodiments, the data door opens manually by interacting with the data door such as pulling the data door out physically, or pushing the data door in to release the data door to automatically swing open. In a preferred embodiment, the bay data door is hinged at the bottom and swings open similar to a drawbridge. In some embodiments the data door may be hinged at the top or at either side. In some embodiments the data door might be a sliding data door.

At step 1606, the operator inserts the cartridge, prepared at step 1601, into the bay site. The operator inserts the cartridge with the barcodes and or and QR codes facing the inside wall of the bay data door, preferably at an opportune angle for the optic device to capture the code data. The angle may be any convenient angle less than 90 degrees and may depend, at least in part, upon the angle at which the camera is mounted on the bay data door. The data door may remain open, partially open, or closed to a first latch position immediately after the cartridge is inserted. At step 1607, the optical device built into the inside wall of the bay data door captures the coded information on the cartridge and identifies the sample, source of the sample, and the procedures or tests to run on the sample.

At step 1608, the operator closes the bay data door. In the case of more than one data door latch position, the operator my "fully" close the bay data door to initiate confirmation or authentication before running analytic procedures. At step 1609, the system aided by software (SW) accesses a laboratory information system (LIS) and authenticates or confirms the information coded on the inserted cartridge is correct and the procedures are approved for run. Initiation of a procedure or of a sequence of procedures may occur automatically at step 1610 upon test confirmation by the LIS. Various graphics may be presented on the display of the bay data door in a touch screen embodiment, the graphics providing at least visual notification to the operator of one or more states of the process. For example, upon authentication at step 1609, a graphic of the cartridge may appear on the display indicating that the data was authenticated and the ordered tests will begin.

At initiation time of a first procedure, a timer is activated that tracks the process time down from an initial and pre-determined amount of time allotted for each procedure. The time allotted for a procedure may be an estimated time that the procedure should occupy, or the exact time it takes for the procedure to run on the system. In any case, the timer ticks down the remaining time as the procedure runs at step 1611 and reads zero when the procedure is complete. At step 1612, the system determines if the testing is complete for a cartridge that is occupying the bay site. A test may include a single procedure or a sequence of procedures performed in serial fashion. In some embodiments a test may include two or more procedures performed in overlap, or in parallel, or otherwise concurrently.

At step 1612, if the system determines that the testing is not complete, the process loops back to step 1611 until the time allotted has run out. At step 1612, if it is determined that the testing is complete, the operator is prompted to remove the cartridge at step 1613. The prompt may be displayed on the display screen on the bay data door of the bay site as a short video clip, a pop-up graphic, a text box, or an icon with or without audio. In some embodiments an audio prompt may be played. At step 1614, the operator opens the bay data door of the bay site and removes the cartridge. The cartridge may then be disposed of or otherwise processed before a next use. At step 1615, the operator closes the bay data door of the bay site. The display indicates that the site is now empty and ready to receive a next cartridge.

## Claims

1. An analytic system, comprising:
a bay (103) having an opening on one side, the bay of a size and shape to enclose a cartridge (200) carrying sample material to be analyzed;
one or more mechanisms within the bay through which the cartridge and or material within the cartridge is influenced by the analytic system;
a door (412) of a size to cover the opening and operable between an open position for receiving the sample cartridge within the bay and a closed position that covers the opening to enclose the sample cartridge within the bay;
a closure mechanism associated with the bay and the door, by which the door is held closed;
an imaging device incorporated in the door and configured for imaging the presence or absence of a cartridge and a visible indicia affixed on a surface of a cartridge in place in the bay; and
an electronic display (105) disposed on the door so as to be visible to a user when the door is in the closed position, wherein the display is configured to present procedural state information..

2. The system of claim 1 further comprising software executing from a non-transitory medium and access to data in a data repository.

3. The system of claim 2 wherein the software comprises routines for operating the mechanisms through which the cartridge and/or material within the cartridge is influenced.

4. The system of claim 1 wherein the mechanisms comprise means for operating a rotary valve to align ports through which material is moved within the sample cartridge, and activation of a plunger that creates pressure alterations to urge material to translate between chambers in a sample cartridge.

5. The system of claim 4 wherein a plurality of routines are accessible and executable for operating the mechanisms for individual ones of a plurality of analytic sequences, selected according to the nature of the sample material in the cartridge.

6. The system of claim 5 wherein the analytic sequence for a cartridge is selectable in accordance with a bar code or QR code affixed to the cartridge in place in the bay.

7. The system of claim 3 wherein a cartridge and operations associated with a cartridge can be associated with an individual person, and results of operations are storable in association with the individual through a visible indicia affixed to the cartridge in place in the bay.

8. The system of claim 1 wherein the display is a passive display and is updatable periodically to indicate to an operator one or more of time to completion of an analytic sequence in progress, presence or absence of a cartridge in the bay when the door is closed, or one or more actions required by the operator to further a test sequence.

9. The system of claim 1 wherein the display is a touch-screen display updatable to present information to an operator, and wherein interactive indices are provided whereby the operator may initiate activities of the system.

10. An analytic method, comprising the steps of:
(a) placing a cartridge (200) carrying sample material to be analyzed, and one or more bar codes or QR codes, in a bay (103) having an opening on one side of a size and shape to enclose the cartridge, and further having mechanisms within the bay through which the cartridge and or material within the cartridge is influenced;
(b) imaging the cartridge by an imaging device incorporated in a door (412) of a size to cover the opening, with the door in an open position, and acquiring by the imaging (i) presence of the cartridge, and (ii) one or more visible indicia affixed to a surface of the cartridge; and
(c) closing the door and holding it closed by a closure mechanism associated with the bay and the door, wherein the door further comprises an electronic display (105) on a side of the door visible to an operator with the door closed and latched, and procedural state information is presented on the electronic display to an operator.

11. The method of claim 10 further comprising a step executing software from a non- transitory medium and accessing data in a data repository.

12. The method of claim 11 comprising steps for operating the mechanisms within the bay through which the cartridge and or material within the cartridge is influenced by executing the software.

13. The method of claim 10 wherein the mechanisms comprise a rotary valve to align ports through which material is moved within the sample cartridge, and a plunger that creates pressure alterations to urge material to translate between chambers in a sample cartridge, further comprising steps for operating the rotary valve and the plunger.

14. The method of claim 12 wherein a plurality of routines are accessed and executed to operate the mechanisms for individual ones of a plurality of analytic sequences, selected according to the nature of the sample material in the cartridge.

15. The method of claim 14 wherein the analytic sequence for a cartridge is selected in accordance with a bar code or QR code affixed to the cartridge in place in the bay.

16. The method of claim 12 wherein a cartridge and operations associated with a cartridge are associated with an individual, and results of operations are stored associated with the individual through acquisition of a bar code or QR code affixed to the cartridge in place in the bay.

17. The method of claim 10 wherein the display is a passive display and is updated periodically to indicate to an operator one or more of time to completion of an analytic sequence in progress, presence or absence of a cartridge in the bay when the door is closed, or one or more actions required by the operator to further a test sequence.

18. The method of claim 10 wherein the display is a touch-screen display updated to present information to an operator, and wherein interactive indices are provided whereby the operator may initiate activities of the system.

## Patentansprüche

1. Analysesystem, das Folgendes umfasst:
eine Bucht (103), die eine Öffnung auf einer Seite aufweist, wobei die Bucht von einer Größe und einer Form ist, um ein Magazin (200) einzuschließen, das das Probenmaterial trägt, das analysiert werden soll;
einen oder mehrere Mechanismen innerhalb der Bucht, über die das Magazin und/oder das Material innerhalb des Magazins durch das Analysesystem beeinflusst wird;
eine Tür (412), die von einer Größe ist, um die Öffnung abzudecken, und zwischen einer offenen Position zum Aufnehmen des Probenmagazins innerhalb der Bucht und einer geschlossenen Position betriebsfähig ist, die die Öffnung abdeckt, um das Probenmagazin innerhalb der Bucht einzuschließen;
einen Schließmechanismus, der mit der Bucht und der Tür verknüpft ist, durch den die Tür geschlossen gehalten wird;
eine Abbildungsvorrichtung, die in die Tür eingebaut und zum Abbilden der Anwesenheit oder der Abwesenheit eines Magazins und eines sichtbaren Zeichens konfiguriert ist, das auf einer Oberfläche eines Magazins an Ort und Stelle in der Bucht angebracht ist; und
eine elektronische Anzeige (105), die an der Tür angeordnet ist, um für einen Benutzer sichtbar zu sein, wenn sich die Tür in der geschlossenen Position befindet, wobei die Anzeige konfiguriert ist, um Verfahrenszustandsinformationen darzustellen.

2. System nach Anspruch 1, das ferner eine Software, die von einem nicht flüchtigen Medium ausgeführt wird, und einen Zugriff auf Daten in einem Daten-Repository umfasst.

3. System nach Anspruch 2, wobei die Software Routinen zum Betreiben der Mechanismen umfasst, über die das Magazin und/oder das Material innerhalb des Magazins beeinflusst wird.

4. System nach Anspruch 1, wobei die Mechanismen ein Mittel zum Betreiben eines Drehventils umfassen, um Zugänge auszurichten, über die Material innerhalb des Probenmagazins bewegt wird, und eine Aktivierung eines Kolbens, der Druckänderungen erzeugt, um Material zu zwingen, sich zwischen Kammern in einem Probenmagazin zu verschieben.

5. System nach Anspruch 4, wobei mehrere Routinen zum Betreiben der Mechanismen für einzelne von mehreren Analysesequenzen zugänglich und ausführbar sind, die gemäß der Art des Probenmaterials in dem Magazin ausgewählt sind.

6. System nach Anspruch 5, wobei die Analysesequenz für ein Magazin gemäß einem Strichcode oder einem QR-Code auswählbar ist, der an dem Magazin an Ort und Stelle in der Bucht angebracht ist.

7. System nach Anspruch 3, wobei ein Magazin und Betriebe, die mit einem Magazin verknüpft sind, in der Lage sind, mit einer einzelnen Person verknüpft zu werden und Ergebnisse von Betrieben in Verknüpfung mit dem Individuum über ein sichtbares Zeichen speicherbar sind, die an dem Magazin an Ort und Stelle in der Bucht angebracht sind.

8. System nach Anspruch 1, wobei die Anzeige eine passive Anzeige ist und in regelmäßigen Abständen aktualisierbar ist, um einem Bediener die Zeit bis zu einem Abschluss einer sich in Ausführung befindlichen Analysesequenz, die Anwesenheit oder die Abwesenheit eines Magazins in der Bucht, wenn die Tür geschlossen ist, und/oder eine oder mehrere Aktionen, die durch den Bediener erforderlich sind, um eine Testsequenz voranzubringen, anzuzeigen.

9. System nach Anspruch 1, wobei die Anzeige eine Touchscreen-Anzeige ist, die aktualisierbar ist, um einem Bediener Informationen darzustellen, und wobei interaktive Zeichen bereitgestellt werden, wodurch der Bediener Aktivitäten des Systems einleiten kann.

10. Analyseverfahren, das die folgenden Schritte umfasst:
(a) Platzieren eines Magazins (200), das das Probenmaterial, das analysiert werden soll, und einen oder mehrere Strichcodes oder QR-Codes in einer Bucht (103) trägt, das eine Öffnung auf einer Seite von einer Größe und einer Form aufweist, um das Magazin einzuschließen, und ferner Mechanismen innerhalb der Bucht aufweist, über die das Magazin und/oder das Material innerhalb des Magazins beeinflusst wird;
(b) Abbilden des Magazins durch eine Abbildungsvorrichtung, die in eine Tür (412) von einer Größe eingebaut ist, die die Öffnung abdeckt, wobei sich die Tür in einer offenen Position befindet, und Erfassen durch das Abbilden (i) der Anwesenheit des Magazins und (ii) einer oder mehrerer sichtbarer Zeichen, die an einer Oberfläche des Magazins angebracht sind; und
(c) Schließen der Tür und Geschlossenhalten durch einen Schließmechanismus, der mit der Bucht und der Tür verknüpft ist, wobei die Tür ferner eine elektronische Anzeige (105) auf einer Seite der Tür umfasst, die für einen Bediener bei der geschlossenen und verriegelten Tür sichtbar ist, und die Verfahrenszustandinformationen auf der elektronischen Anzeige für einen Bediener dargestellt werden.

11. Verfahren nach Anspruch 10, das ferner einen Schritt zum Ausführen von Software von einem nicht flüchtigen Medium und Zugreifen auf Daten in einem Daten-Repository umfasst.

12. Verfahren nach Anspruch 11, das Schritte zum Betreiben der Mechanismen innerhalb der Bucht umfasst, über die das Magazin und/oder das Material innerhalb des Magazins durch Ausführen der Software beeinflusst wird.

13. Verfahren nach Anspruch 10, wobei die Mechanismen ein Drehventil, um Zugänge auszurichten, über die Material innerhalb des Probenmagazins bewegt wird, und einen Kolben umfassen, der Druckänderungen erzeugt, um Material zu zwingen, zwischen Kammern in ein Probenmagazin zu verschieben, das ferner Schritte zum Betreiben des Drehventils und des Kolbens umfasst.

14. Verfahren nach Anspruch 12, wobei auf mehrere Routinen zugegriffen wird und diese ausgeführt werden, um die Mechanismen für einzelne von mehreren Analysesequenzen zu betreiben, die gemäß der Art des Probenmaterials in dem Magazin ausgewählt sind.

15. Verfahren nach Anspruch 14, wobei die Analysesequenz für ein Magazin gemäß einem Strichcode oder einem QR-Code ausgewählt wird, der an dem Magazin an Ort und Stelle in der Bucht angebracht ist.

16. Verfahren nach Anspruch 12, wobei ein Magazin und Betriebe, die mit einem Magazin verknüpft sind, mit einer Person verknüpft sind, und Ergebnisse von Betrieben über eine Erfassung eines Strichcodes oder eines QR-Codes, der an dem Magazin an Ort und Stelle in der Bucht angebracht ist, mit der Person verknüpft gespeichert werden.

17. Verfahren nach Anspruch 10, wobei die Anzeige eine passive Anzeige ist und in regelmäßigen Abständen aktualisiert wird, um einem Bediener die Zeit bis zu dem Abschluss einer sich in Ausführung befindlichen Analysesequenz, die Anwesenheit oder die Abwesenheit eines Magazins in der Bucht, wenn die Tür geschlossen ist, und/oder eine oder mehrere Aktionen, die durch den Bediener erforderlich sind, um eine Testsequenz zu voranzubringen, anzuzeigen.

18. Verfahren nach Anspruch 10, wobei die Anzeige eine Touchscreen-Anzeige ist, die aktualisiert wird, um einem Bediener Informationen darzustellen, und wobei interaktive Zeichen bereitgestellt werden, wodurch der Bediener Aktivitäten des Systems einleiten kann.

## Revendications

1. Système analytique, comprenant :
une baie (103)
ayant une ouverture sur un côté, la baie ayant une taille et une forme permettant d'enfermer une cartouche (200) portant un matériau échantillon à analyser ;
un ou plusieurs mécanismes à l'intérieur de la baie par lesquels la cartouche et / ou le matériau à l'intérieur de la cartouche est / sont influencé(e)(s) par le système analytique ;
une porte (412)
d'une taille permettant de couvrir l'ouverture et pouvant fonctionner entre une position ouverte pour recevoir la cartouche d'échantillons à l'intérieur de la baie et une position fermée qui couvre l'ouverture pour enfermer la cartouche d'échantillons à l'intérieur de la baie ;
un mécanisme de fermeture associé à la baie et à la porte, par lequel la porte est maintenue fermée ;
un dispositif de formation d'image, incorporé dans la porte et configuré pour former une image de la présence ou de l'absence d'une cartouche et d'un indice visible apposé sur une surface d'une cartouche en place dans la baie ; et
un affichage électronique (105)
disposé sur la porte de manière à être visible pour un utilisateur lorsque la porte est dans la position fermée, dans lequel l'affichage est configuré pour présenter des informations d'état de procédure.

2. Système selon la revendication 1 comprenant en outre un logiciel s'exécutant à partir d'un support non-transitoire et un accès aux données dans un référentiel de données.

3. Système selon la revendication 2 dans lequel le logiciel comprend des routines pour faire fonctionner les mécanismes par lesquels la cartouche et / ou le matériau dans la cartouche est / sont influencé(e)(s).

4. Système selon la revendication 1, dans lequel les mécanismes comprennent des moyens pour actionner une vanne rotative pour aligner des orifices à travers lesquels le matériau est déplacé à l'intérieur de la cartouche d'échantillons, et l'activation d'un plongeur qui crée des modifications de pression pour pousser le matériau à se déplacer entre les chambres dans une cartouche d'échantillons.

5. Système selon la revendication 4, dans lequel une pluralité de routines sont accessibles et exécutables pour faire fonctionner les mécanismes de séquences individuelles d'une pluralité de séquences analytiques, sélectionnées en fonction de la nature du matériau échantillon dans la cartouche.

6. Système selon la revendication 5, dans lequel la séquence analytique d'une cartouche peut être sélectionnée en fonction d'un code à barres ou d'un code QR apposé sur la cartouche en place dans la baie.

7. Système selon la revendication 3, dans lequel une cartouche et les opérations associées à une cartouche peuvent être associées à une personne individuelle, et les résultats des opérations sont stockables en association avec la personne par le biais d'un indice visible apposé sur la cartouche en place dans la baie.

8. Système selon la revendication 1, dans lequel l'affichage est un affichage passif et peut être mis à jour périodiquement pour indiquer à un opérateur un ou plusieurs élément(s) parmi le temps d'achèvement d'une séquence analytique en cours, la présence ou l'absence d'une cartouche dans la baie lorsque la porte est fermée, ou une ou plusieurs actions requises par l'opérateur pour poursuivre une séquence de test.

9. Système selon la revendication 1, dans lequel l'affichage est un affichage à écran tactile pouvant être mis à jour pour présenter des informations à un opérateur, et dans lequel des indices interactifs sont fournis, grâce auxquels l'opérateur peut lancer des activités du système.

10. Procédé analytique, comprenant les étapes suivantes :
(a) placement d'une cartouche (200) portant un matériau échantillon à analyser, et un ou plusieurs codes à barres ou codes QR, dans une baie (103) ayant une ouverture sur un côté d'une taille et d'une forme permettant d'enfermer la cartouche, et ayant en outre des mécanismes à l'intérieur de la baie à travers lesquels la cartouche et / ou le matériau à l'intérieur de la cartouche est / sont influencé(e) (s) ;
(b) formation d'une image de la cartouche par un dispositif de formation d'image incorporé dans une porte (412) d'une taille permettant de couvrir l'ouverture, la porte étant en position ouverte, et acquisition par l'imagerie (i) de la présence de la cartouche, et (ii) d'un ou plusieurs indices visibles apposés sur une surface de la cartouche ; et
(c) fermeture de la porte et son maintien en position fermée par un mécanisme de fermeture associé à la baie et à la porte, dans lequel la porte comprend en outre un affichage électronique (105) sur un côté de la porte visible par un opérateur avec la porte fermée et verrouillée, et des informations d'état de procédure sont présentées sur l'affichage électronique à un opérateur.

11. Procédé selon la revendication 10 comprenant en outre une étape consistant à exécuter un logiciel à partir d'un support non transitoire et à accéder à des données dans un référentiel de données.

12. Procédé selon la revendication 11 comprenant des étapes pour faire fonctionner les mécanismes à l'intérieur de la baie à travers lesquels la cartouche et / ou le matériau à l'intérieur de la cartouche est / sont influencé (e) (s) par l'exécution du logiciel.

13. Procédé selon la revendication 10, dans lequel les mécanismes comprennent une vanne rotative pour aligner des orifices à travers lesquels le matériau est déplacé à l'intérieur de la cartouche d'échantillons, et un plongeur qui crée des modifications de pression pour pousser le matériau à se déplacer entre les chambres dans une cartouche d'échantillons, comprenant en outre des étapes pour faire fonctionner la vanne rotative et le plongeur.

14. Procédé selon la revendication 12, dans lequel une pluralité de routines sont accessibles et exécutées pour faire fonctionner les mécanismes de séquences individuelles d'une pluralité de séquences analytiques, sélectionnées selon la nature du matériau échantillon dans la cartouche.

15. Procédé selon la revendication 14, dans lequel la séquence analytique d'une cartouche est sélectionnée en fonction d'un code à barres ou d'un code QR apposé sur la cartouche en place dans la baie.

16. Procédé selon la revendication 12, dans lequel une cartouche et des opérations associées à une cartouche sont associées à un individu, et des résultats d'opérations sont stockés associés à l'individu par l'acquisition d'un code à barres ou d'un code QR apposé sur la cartouche en place dans la baie.

17. Procédé selon la revendication 10, dans lequel l'affichage est un affichage passif et est mis à jour périodiquement pour indiquer à un opérateur un ou plusieurs éléments parmi le temps d'achèvement d'une séquence analytique en cours, la présence ou l'absence d'une cartouche dans la baie lorsque la porte est fermée, ou une ou plusieurs actions requises par l'opérateur pour poursuivre une séquence d'essai.

18. Procédé selon la revendication 10, dans lequel l'affichage est un affichage à écran tactile mis à jour pour présenter des informations à un opérateur, et dans lequel des indices interactifs sont fournis, grâce auxquels l'opérateur peut lancer des activités du système.
